## Europäisches Patentamt

## European Patent Office

## Office européen des brevets

(19)

(11) Veröffentlichungsnummer: **0 033 940**
**A2**

(12) # EUROPÄISCHE PATENTANMELDUNG

(21) Anmeldenummer: **81100756.6**

(51) Int. Cl.³: **F 16 L 1/02**

(22) Anmeldetag: **03.02.81**

(30) Priorität: **12.02.80 DE 3005135**

(43) Veröffentlichungstag der Anmeldung: **19.08.81**
**Patentblatt 81/33**

(84) Benannte Vertragsstaaten: **AT BE CH FR GB IT LI LU NL SE**

(71) Anmelder: **Krings, Josef, Hans-Böckler-Strasse 23, D-5138 Heinsberg-Oberbruch (DE)**

(72) Erfinder: **Hillemacher, Hellmut, Haagweiher 8, D-5138 Heinsberg (DE)**

(74) Vertreter: **Rauh, Wolfgang, Dipl.-Ing., Krefelder Strasse 35, D-5100 Aachen (DE)**

(54) **Vorrichtung zum Zusammenziehen von Rohren.**

(57) Vorrichtung zum Zusammenziehen von Kanalrohren mit grossem Durchmesser, bestehend aus einer fahrbaren Zugeinrichtung mit einer daran angelenkten Abstützeinrichtung in der Form eines doppelarmigen, mit angelenkten Stützschuhen versehenen Hebels, dessen unterer Hebelarm um ein Vielfaches kleiner ist, als der obere Hebelarm und gegenüber diesem im stumpfen Winkel gegenüber dem zu ziehenden Rohrstück nach rückwärts abgewinkelt ist.

EP 0 033 940 A2

VORRICHTUNG ZUM ZUSAMMENZIEHEN VON ROHREN

Die Erfindung betrifft eine Vorrichtung zum Zusammen - ziehen von Kanalrohren mit großem Durchmesser, bestehend aus einer in den Kanalrohren fahrbaren, mit einem am äußeren Ende des jeweils neu zu verlegenden Rohres angreifenden, im unteren Kanalbereich verlaufenden Zugseil versehenen ZUgeinrichtung und einer unten und oben gegen das Kanalrohr abgestützten, zum jeweils neu zu verlegenden Rohr zugeneigten Abstützeinrichtung, die aus einem doppelarmigen, an der Zugeinrichtung gelenkig gelagerten steifen Hebel besteht, an dessen der Rohrwandung zugewandten Enden Stützschuhe angelenkt sind und an dessen einem Hebelarm eine mit der ZUgeinrichtung gelenkig verbundene Schubeinrichtung angreift.

Eine derartige Abstützeinrichtung ist aus der DE-OS 28 17 632 bekannt geworden. Dabei sind die Hebelarme etwa gleich lang und ist der Hebel insgesamt gerade ausgebildet, so daß hierbei, wenn sich die Hebelarme an den Rohrwandungen abstützen, eine unzureichende Verspannung eintritt.
Bei der bekannten Vorrichtung ist die Hebelarmverteilung so ausgewählt, daß die Zugeinrichtung notwendigerweise hinter dem Hebel angeordnet ist und sich damit im Bereich der Stoßstelle der zu vereinigenden Rohre befindet. Gerade hier sollte aber ein möglichst freier Arbeitsraum vorhanden sein, um die miteinander zu vereinigenden Rohre sicher abdichten zu können.

Der vorliegenden Erfindung liegt die Aufgabe zugrunde, eine Vorrichtung der eingangs genannte Art zu schaffen,

die an beliebiger Stelle innerhalb des ....ts verlegten Kanalrohres aufgestellt und abgestützt werden kann und die sich nicht hinter die Abstützeinrichtung erstreckt. Ferner soll die Möglichkeit geschaffen werden, daß das Zugseil nahe der Rohrmitte angeordnet werden kann, damit das neu heranzuführende Rohr gleichmäßig herangezogen werden kann.

Die Lösung der gestellten Aufgabe besteht gemäß der Erfindung darin, daß die Zugeinrichtung und die Schubeinrichtung vor der Abstützeinrichtung angeordnet sind, daß der Anlenkpunkt des Hebels an der Zugeinrichtung zwischen den beiden Hebelarmen in Höhe des Zugseiles liegt und daß der untere Hebelarm um ein Vielfaches kleiner ist, als der obere Hebelarm und gegenüber diesem im stumpfen Winkel gegenüber dem neu zu verlegenden Rohr nach rückwärts abgewinkelt ist.

Sobald die Abstützeinrichtung ihre vorgesehene Abstützstellung eingenommen hat, trägt jede Zugbelastung der Zugeinrichtung dazu bei, die Stützschuhe noch stärker gegen die Rohrwandung zu pressen und damit die Verankerung der Vorrichtung zu sichern.

Weitere Merkmale der Erfindung sind in den Unteransprüchen angegeben. Nachstehend ist die Erfindung anhand der Zeichnung an einem Ausführungsbeispiel näher erläutert. Es zeigen:

Fig. 1 eine schematische Seitenansicht der Vorrichtung,

Fig. 2 ein schematisches Getriebeschaubild der Abstützeinrichtung und

Fig. 3 eine Rückansicht der Abstützeinrichtung.

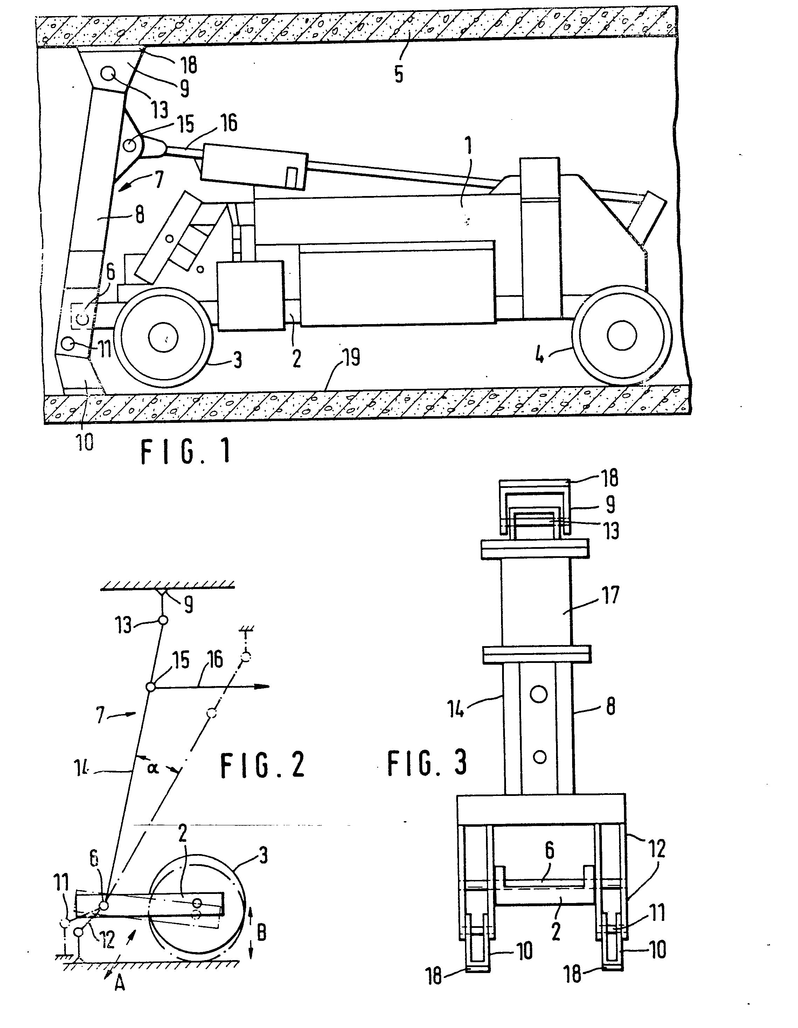

Die in Fig. 1 dargestellte Vorrichtung besteht im Wesentlichen aus einer Zugeinrichtung 1, deren Fahrgestell 2 auf vier Rädern 3, 4 gehalten ist. Durch die Zugeinrichtung 1 ist ein nicht dargestelltes Zugseil geführt, das an einem rechts von der Vorrichtung sich vorzustellenden Rohrstoß angreift, um diesen an den Rohrstoß 5 heranzuziehen, in dem die erfindungsgemäße Vorrichtung angeordnet ist. Das Zugseil liegt zweckmäßig etwa in der Höhe des Fahrgestells 2.

Am rückwärtigen Ende des Fahrgestells 2 ist an einem Gelenkbolzen aus einem doppelarmigen, im unteren Teil gabelförmigen (Fig. 3) Hebel 8 und hieran oben und unten angelenkten hufartigen Stützschuhen 9 und 10.

Wie die Fig. 1 und 2 zeigen, steht die Abstützeinrichtung 7 geneigt in Fahrtrichtung der Vorrichtung. Der untere Stützschuh 10 ist an einem Gelenkbolzen 11 angelenkt. Die Verbindungslinie des Gelenkbolzens 11 mit der Achse bzw. dem Gelenkbolzen 6, d.h. der untere Hebelarm 12 steht im stumpfen Winkel nach rückwärts zu Verbindungslinie bzw. dem oberen Hebelarm 14 zwischen dem Gelenkbolzen 6 und dem Gelenkbolzen 13 des oberen Stützschuhes 9.

Am oberen Hebelarm 14 greift gelenkig an der Stelle 15 eine Schubstange 16 an, die von einer Spindel, einem hydraulischen oder elektrischen Motor oder dgl. betätigbar ist.

Wie Fig. 3 zeigt, kann der obere Hebelarm 14 durch Aufstecken von zusätzlichen Zwischenstücken 17 der jeweiligen lichten Höhe des Kanalrohres 5 angepaßt werden.

Die hufartigen Stützschuhe 9 und 10 haben eine Oberfläche 18 aus elastischem Werkstoff, z.B. Gummi oder Kunststoff.

- 4 -

Wie Fig. 2 zeigt, soll der Abstand A zwischen dem Gelenkbolzen 6 und der Oberfläche des unteren Stützschuhes 10
größer sein, als der Abstand B zwischen dem Gelenkbolzen
6 und der Laufebene 19 des Hinterrades.

Im Betrieb wird die Vorrichtung an einer beliebigen Stelle im bereits verlegten Kanalrohr 5 aufgestellt. Sodann
wird die Abstützeinrichtung 7 um den Winkel   nach rückwärts verschwenkt, wobei sie weiterhin eine Schräglage
einnimmt, ihre hufartigen Stützschuhe 9, 10 jedoch oben
und unten an der Innenwand des Rohrstoßes 5 angreifen.
Das Einbringen der Abstützeinrichtung 7 in die Abstützstellung erfolgt mittels der Schubstange 16, die mit ihrem
Antrieb der Abstützeinrichtung als Schubeinrichtung zugeordnet ist.

Beim Einschwenken der Abstützeinrichtung 7 in ihre Stützstellung wird gleichzeitig das Hinterrad 3 der Zugeinrichtung 1 angehoben. Die auf die ZUgeinrichtung 1 einwirkenden Zugkräfte beim Heranziehen des nächsten Kanalrohres bewirken eine zunehmende Anpressung der Abstützeinrichtung 7 gegen die Wandung des Kanalrohres 5 und geben
der ganzen Vorrichtung einen sicheren Halt. Nach Beendigung der Zieharbeit wird die Abstützeinrichtung nach
vorn geschwenkt und damit vom Kanalrohr 5 gelöst.

- 1 -

PATENTANSPRÜCHE

1. Vorrichtung zum Zusammenziehen von Kanalrohren mit großem Durchmesser, bestehend aus einer in den Kanalrohren fahrbaren, mit einem am äußeren Ende des jeweils neu zu verlegenden Rohres angreifenden, im unteren Kanalbereich verlaufenden Zugseil versehenen Zugeinrichtung und einer unten und oben gegen das Kanalrohr abgestützten, zum jeweils neu zu verlegenden Rohr zugeneigten Abstützeinrichtung, die aus einem doppelarmigen, an der Zugeinrichtung gelenkig gelagerten steifen Hebel besteht, an dessen der Rohrwandung zugewandten Enden Stützschuhe angelenkt sind und an dessen einem Hebelarm eine mit der Zugeinrichtung gelenkig verbundene Schubeinrichtung angreift, d a d u r c h   g e k e n n z e i c h n e t . daß die Zugeinrichtung (1) und die Schubeinrichtung (16) vor der Abstützeinrichtung (7) angeordnet sind, daß der Anlenkpunkt (6) des Hebels (8) an der Zugeinrichtung (1) zwischen den beiden Hebelarmen (12 und 14) in Höhe des Zugseiles liegt und daß der untere Hebelarm (12) um ein Vielfaches kleiner ist, als der obere Hebelarm (14) und gegenüber diesem im stumpfen Winkel gegenüber dem neu zu verlegenden Rohr nach rückwärts abgewinkelt ist.

2. Vorrichtung nach Anspruch 1, d a d u r c h   g e - k e n n z e i c h n e t, daß zumindest der untere Hebelarm (12) als Doppelarm ausgebildet ist.

3. Vorrichtung nach Anspruch 1 oder 2, d a d u r c h g e k e n n z e i c h n e t, daß die Abstützfläche (18) der Stützschuhe (9 und 10) aus elastischem Werkstoff, z.B. Gummi oder Kunststoff, besteht.

4. Vorrichtung nach einem der Ansprüche 1 bis 3, d a - durch gekennzeichnet, daß der Abstand (A) zwischen dem Anlenkpunkt (6) des Hebels (8) an der Zugeinrichtung (1) und der Abstützfläche (18) des unteren Stützschuhes (10) in der Abstützstellung größer ist, als der Abstand (B) zwischen dem Anlenkpunkt (6) und der Laufebene (19) des Hinterrades (3) der Zugeinrichtung (1)

5. Vorrichtung nach einem der Ansprüche 1 bis 4, d a - durch gekennzeichnet, daß der obere Hebelarm (14) der Abstützeinrichtung (7) durch angeflanschte Teilstücke (17) verlängerbar ist.

FIG. 1

FIG. 2

FIG. 3